# FASCICULE DE BREVET EUROPEEN

(11) **EP 1 597 205 B1**
(45) Date de publication et mention de la délivrance du brevet: **05.09.2007**
(21) Numéro de dépôt: 03720649.7
(22) Date de dépôt: 26.02.2003
(51) Int. Cl.: C02F 9/00

(54) **PROCEDE ET INSTALLATION DE TRAITEMENT D EFFLUENTS LIQUIDES C ONTENANT NOTAMMENT DES POLLUANTS EN SUSPENSION**
VERFAHREN UND VORRICHTUNG ZUR BEHANDLUNG VON ABWÄSSER, WELCHE INSBESONDERE SUSPENDIERTE SCHADSTOFFE ENTHALTEN
METHOD AND SYSTEM FOR THE TREATMENT OF LIQUID EFFLUENTS CONTAINING POLLUTANTS IN A SUSPENSION

(43) Date de publication de la demande: 23.11.2005
(73) Titulaire: Degremont S.A., 92508 Rueil Malmaison (FR)
(72) Inventeur: CAMPOS, Carlos, F-78230 Le Pecq (FR); BERNAZEAU, François, F-92500 Rueil Malmaison (FR); MOLES, Jacques, F-92500 Rueil Malmaison (FR); LEVASSEUR, William, F-27290 Appeville dit Annebault (FR)
(74) Mandataire: Michardière, Bernard
(86) Numéro de dépôt international: PCT/FR2003/000627
(87) Numéro de publication internationale: WO 2004/083132

(56) Documents cités:
- EP-A- 0 421 399
- US-A- 3 490 590
- US-A- 5 505 841
- PATENT ABSTRACTS OF JAPAN vol. 018, no. 061 (C-1160), 2 février 1994 (1994-02-02) & JP 05 277499 A (HITACHI PLANT ENG & CONSTR CO LTD), 26 octobre 1993 (1993-10-26)
- PATENT ABSTRACTS OF JAPAN vol. 1998, no. 10, 31 août 1998 (1998-08-31) & JP 10 137755 A (TOHOKU ELECTRIC POWER CO INC;KURITA WATER IND LTD), 26 mai 1998 (1998-05-26)
- PATENT ABSTRACTS OF JAPAN vol. 010, no. 031 (C-327), 6 février 1986 (1986-02-06) & JP 60 183084 A (EIICHI SAITOU;OTHERS: 01), 18 septembre 1985 (1985-09-18)

## Description

La présente invention concerne un procédé ainsi qu'un dispositif destinés à assurer le traitement d'effluents liquides contenant notamment des polluants en solution, par exemple des matières organiques naturelles, des micropolluants, etc...

De tels procédés et dispositifs mettent en oeuvre des moyens de séparation gravitaire incluant des systèmes connus du type décanteur ou flottateur, éventuellement suivis d'une filtration granulaire. On sait que lors du traitement d'un effluent liquide, il peut être nécessaire d'utiliser des agents réactifs pulvérulents tels - que des adsorbants (par exemple du charbon actif, des bentonites ou des échangeurs d'ions type gel ou macroporeux, à squelette standard ou magnétique). L'addition de ces réactifs dans la chaîne de traitement de l'effluent liquide s'effectue le plus souvent en même temps qu'un autre réactif favorisant la coagulation, la floculation et la séparation gravitaire des impuretés particulaires contenues dans la solution. Une telle mise en oeuvre permet donc d'éliminer du courant de l'effluent liquide à traiter les impuretés particulaires, colloïdales et dissoutes. Cependant, il est reconnu que pour améliorer l'efficacité de ce type de procédé, il convient d'ajouter le réactif adsorbant avant le coagulant, car ces réactifs en suspension se comportent comme des colloïdes et il est nécessaire de prendre en compte leur présence lors de l'ajustement des doses de réactifs nécessaires à la clarification.

L'avènement des techniques de séparation membranaire, notamment les applications de l'ultrafiltration au traitement des effluents liquides, permet d'améliorer le rendement global des moyens de clarification et de filtration installés en amont des moyens de séparation membranaire, les membranes ayant un rendement de séparation égal à 100% pour les particules qui sont plus grandes que le pouvoir de séparation des membranes utilisées. Dans ce contexte, il est souhaitable d'injecter le coagulant en amont des réactifs adsorbants : l'hydroxyde métallique formé lors de la coagulation et floculation permet d'adsorber la majeure partie de la matière organique (molécules organiques de haut poids moléculaire), ce qui favorise le rendement d'adsorption de la matière organique résiduelle et des micropolluants par l'adsorbant pulvérulent.

Comme il s'est avéré que la matière organique et les micropolluants sont en compétition pour les mêmes sites d'adsorption, le rendement de ce type de filière peut être amélioré en multipliant les points d'injection et les types d'adsorbant. Par exemple, dans une filière incluant un décanteur suivi de membranes, un premier adsorbant sera ajouté avant le décanteur et un second avant les membranes. Chacun des réacteurs étant optimisé en fonction des caractéristiques propres aux matières à éliminer et aux adsorbants. C'est à ce type d'installation que se réfère la présente invention.

On connaît, notamment par FR-A-2 628 337, des installations pour l'épuration de fluides au moyen de membranes dans lesquelles on introduit un agent adsorbant, par exemple du charbon actif pulvérulent et/ou en grains, cet agent adsorbant étant introduit dans le courant du fluide à épurer, avant les membranes de filtration.

On connaît également, notamment par US-A-4 610 792, des installations de traitement d'eaux polluées comportant des moyens de clarification et des moyens de séparation membranaire en traitement de finition. Dans ce type d'installation connue, on introduit un réactif pulvérulent, par exemple du charbon actif dans la chaîne de traitement de l'eau brute entre les moyens de clarification conventionnelle et les moyens de séparation membranaire, le réactif pulvérulent étant recirculé dans la boucle de filtration membranaire entre les moyens de clarification et les moyens de séparation membranaire.

On connaît également des systèmes plus anciens d'addition de réactifs pulvérulents selon lesquels le réactif est injecté dans la chaîne de traitement, directement en amont de la séparation gravitaire (flottateur ou décanteur).

Enfin on connaît (FR-A-2 696 440 et JP05277499) des installations pour l'épuration des fluides comportant des moyens de séparation gravitaire et des moyens de séparation membranaire, dans lesquelles le réactif pulvérulent est introduit en amont des membranes et les eaux de rétrolavage de ces membranes contenant ce réactif pulvérulent sont recirculées en tête des moyens de séparation gravitaire.

En partant de cet état de la technique, la présente invention se propose d'apporter des perfectionnements permettant d'améliorer les rendements d'élimination de la pollution dissoute, tout en diminuant les coûts d'exploitation.

En conséquence, cette invention a pour objet, en premier lieu, un procédé pour l'épuration et la filtration de fluides, notamment d'effluents liquides tels que de l'eau brute contenant des polluants organiques en solution et mettant en oeuvre des moyens de séparation gravitaire tels que notamment décanteur et flottateur, ainsi que des moyens de séparation membranaire, en étape de finition, selon lequel on introduit un premier réactif pulvérulent dans le courant du fluide à traiter en amont de la séparation gravitaire, et un deuxième réactif pulvérulent, en amont de la séparation membranaire, ce procédé étant caractérisé en ce que le coagulant nécessaire à la séparation est injecté avant le premier réactif pulvérulent, en ce que lesdits premier et second réactifs pulvérulents présentent des caractéristiques différentes, notamment granulométrie, capacité d'adsorption adaptée aux polluants à éliminer, et en ce que ledit second réactif pulvérulent est recyclé à partir des moyens de séparation membranaire vers l'amont des moyens de séparation gravitaire.

Le fait selon l'invention d'ajouter le coagulant avant le premier réactif pulvérulent dans un réacteur dont, par ailleurs, le temps de contact est adaptable aux caractéristiques de l'eau brute (température, turbidité, matière organique, etc.) permet d'obtenir un temps de séjour pour l'adsorbant qui est généralement compris entre 5 et 20 heures, mais jamais au-delà de 60 heures, délai au-delà duquel il a été observé que le rendement de la première étape d'adsorption est nettement diminué, en particulier en ce qui concerne l'élimination des micropolluants.

Selon un mode de mise en oeuvre du procédé tel que défini ci-dessus, chacun des réactifs pulvérulents est constitué par des agents adsorbants, notamment du charbon actif, des bentonites ou des échangeurs d'ions type gel ou macroporeux, à squelette standard ou magnétique.

L'invention vise également un dispositif pour la mise en oeuvre du procédé tel que défini ci-dessus.

Ce dispositif comporte une ligne de traitement incluant notamment des moyens de séparation gravitaire, des moyens de séparation membranaire en étape de finition, des moyens permettant respectivement l'introduction de coagulant, d'un premier réactif pulvérulent en amont de la séparation gravitaire et d'un second réactif pulvérulent en amont des moyens de séparation membranaire, ce dispositif étant caractérisé en ce qu'il comporte en outre une boucle de recyclage du second réactif pulvérulent depuis la purge des moyens de séparation membranaire jusqu'à la conduite dans laquelle circule l'effluent liquide à traiter, en amont des moyens de séparation gravitaire et en ce que les moyens d'injection du coagulant nécessaire à la séparation sont situés en amont des moyens d'injection du premier réactif pulvérulent.

Selon un exemple de réalisation de ce dispositif, les moyens de séparation gravitaire sont réalisés sous la forme d'un clarificateur, pouvant être constitué d'un décanteur à lit de boues ou d'un appareil à recirculation de boues, éventuellement complété d'un système de séparation lamellaire, et précédé soit d'une zone de contact pour l'injection du coagulant, soit d'une étape complète de coagulation, floculation, le choix entre les différentes combinaison étant guidé par le temps nécessaire au coagulant pour réaliser sa première adsorption et par le temps de séjour nécessaire pour que le premier réactif pulvérulent offre un rendement d'adsorption optimal.

Selon un autre mode de réalisation de l'invention, les moyens de séparation gravitaire sont réalisés sous la forme d'un clarificateur tel qu'un flottateur, éventuellement précédé soit d'une zone de contact pour l'injection du coagulant, soit d'une étape complète de coagulation-floculation.

Selon l'invention, les moyens de séparation membranaire sont constitués par des systèmes de microfiltration, d'ultrafiltration, de nanofiltration, voire d'osmose inverse équipés de membranes en configuration plane (« plate and frame »),tubulaire, spirale ou fibre creuse (à peau externe ou peau interne). Les moyens de séparation gravitaire peuvent comporter un filtre granulaire à flux ascendant ou descendant.

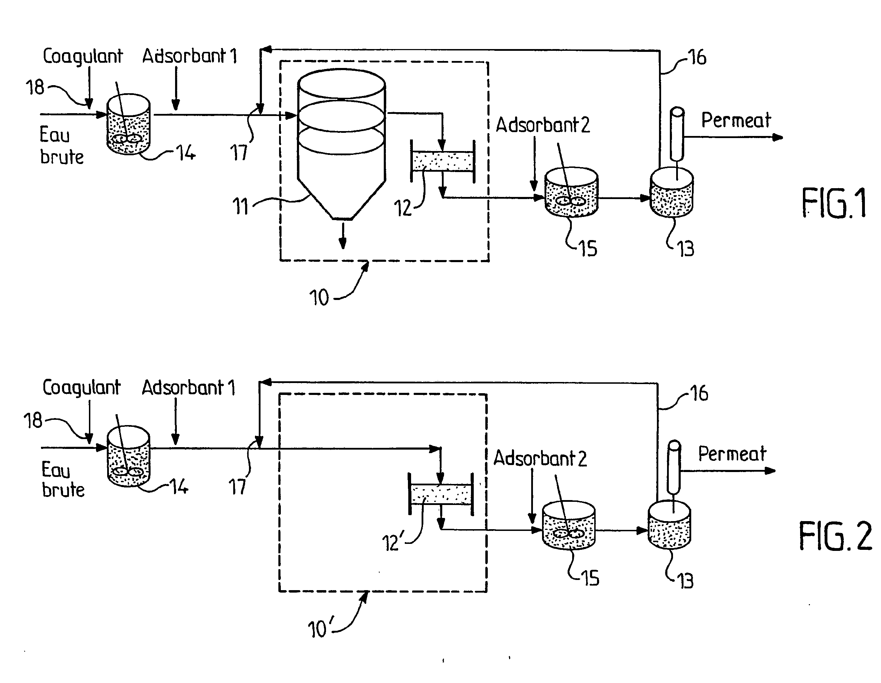

D'autres caractéristiques et avantages de la présente invention ressortiront de la description faite ci-après en référence aux dessins annexés qui en illustrent un exemple de réalisation dépourvu de tout caractère limitatif. Sur les dessins, les figures 1 et 2 sont des représentations schématiques de deux modes de réalisation d'un dispositif de traitement mettant en oeuvre le procédé objet de l'invention.

En se référant à la figure 1, on voit que le dispositif selon la présente invention comprend comme connu un moyen de séparation gravitaire désigné dans son ensemble par la référence 10, qui peut être constitué d'un clarificateur 11, suivi d'un filtre granulaire 12 et d'un moyen de séparation membranaire 13 réalisé, par exemple, sous la forme de dispositifs systèmes de microfiltration, d'ultrafiltration, de nanofiltration, voire d'osmose inverse. On notera que le clarificateur 11 peut être constitué d'un décanteur à lit de boues ou d'un appareil à recirculation de boues, soit un flottateur, soit un décanteur, éventuellement complété d'un système de séparation lamellaire.

Selon l'invention, le dispositif prévoit l'introduction d'un réactif coagulant, en un point 18 de la conduite d'alimentation en eau brute, suivie d'un réacteur 14 de mélange et contact, de moyens pour l'introduction du premier réactif pulvérulent (Adsorbant 1), en amont du séparateur gravitaire 10 et en aval du point d'injection 18 du réactif coagulant et, d'un moyen pour l'introduction du second réactif pulvérulent - (Adsorbant 2) en amont du séparateur membranaire 13. On prévoit également un réacteur de mélange et contact 15 entre les moyens d'introduction de l'Adsorbant 2 et les moyens de séparation membranaire 13.

Selon la présente invention, le dispositif comporte également un recyclage du second réactif pulvérulent (Adsorbant 2), à partir de la purge du séparateur membranaire 13, à l'aide d'une boucle 16 amenant le second réactif pulvérulent ainsi recyclé en un point 17 situé sur la conduite d'amenée de l'eau brute en amont du séparateur gravitaire 10, en aval du point d'introduction 18 du coagulant.

Ainsi qu'on l'a précisé ci-dessus, les réactifs pulvérulents (Adsorbants 1 et 2) présentent des caractéristiques différentes (matériaux, granulométrie, capacité d'adsorption adaptée aux polluants à éliminer).

On se réfère maintenant à la figure 2 qui illustre une variante du dispositif selon l'invention. On voit que, dans cette variante, le moyen de séparation gravitaire 10' ne comporte pas de clarificateur et il peut être constitué d'un filtre granulaire 12' (à filtration ascendante ou descendante), éventuellement précédé soit d'une zone de contact pour l'injection du coagulant, soit d'une étape complète de coagulation-floculation. Le moyen de séparation membranaire 13 peut être réalisé, par exemple, sous la forme de dispositifs d'ultrafiltration. Ce dispositif est particulièrement intéressant pour la clarification des eaux dans lesquelles la charge colloïdale et celle de la matière en suspension sont faibles.

Selon l'invention et comme précédemment, dans cette variante on prévoit un moyen pour l'introduction d'un réactif coagulant, en un point 18 de la conduite d'alimentation en eau brute, en amont du point d'injection du premier réactif pulvérulent, suivi d'un réacteur de mélange et contact 14, d'un moyen d'injection du premier réactif pulvérulent (Adsorbant 1) en un point situé en amont des filtres granulaires 12' et un moyen d'injection du second réactif pulvérulent (Adsorbant 2) en amont du séparateur membranaire 13. On prévoit également un recyclage du second réactif pulvérulent (Adsorbant 2), provenant de la purge du séparateur membranaire 13, à l'aide d'une boucle 16 amenant le réactif pulvérulent ainsi recyclé en un point 17 situé sur la conduite d'amenée de l'eau brute en amont du séparateur gravitaire 10', en aval du point 18 d'injection du coagulant.

Ainsi, par rapport à la technique connue, telle que définie notamment dans les publications mentionnées ci-dessus, l'invention se différencie par le fait qu'elle met en oeuvre deux réactifs pulvérulents de caractéristiques différentes, ajoutés en différents points de la ligne de traitement, et que le coagulant est injecté avant le premier réactif pulvérulent. Grâce à cette disposition, le rendement de l'adsorption des différents polluants organiques est optimisé (car les effets du coagulant et de l'adsorbant ne se contrarient pas ), tout en réduisant les coûts d'exploitation de la filière.

On a donné ci-après des résultats de tests mettant en oeuvre le procédé selon l'invention, en indiquant les gains de rendement pour l'adsorption de la matière organique (MO) et des pesticides. Ces résultats sont consignés dans les tableaux 1 et 2.

**Tableau 1 : Comparaison des pourcentages d'élimination de la matière organique (COT) pour injection simultanée ou décalée du coagulant et de l'adsorbant.**

| Temps de contact (mn) | Coagulation et Adsorption simultanées | Coagulation à to = 0, puis adsorption à to + 3 mn |
|---|---|---|
| 0 | 0 % | 70 |
| 10 | 57 % | 71 |
| 20 | 65 % | 76 |
| 30 | 65% | 80 |
| 60 | 68 % | 82 |
| 120 | 70 % | 85 |
| 180 | 72 % | 90 |

Dans les deux cas on utilise, sur une même eau contenant 10 mg / l de COT (Carbone Organique Total), une dose de coagulant de 60 mg/l de chlorure ferrique et une dose d'adsorbant de 15 mg/l de charbon actif en poudre, Norit W 35 . Le rendement d'élimination est nettement amélioré dans le cas de l'injection décalée.

**Tableau 2 : Rendements d'adsorption de COT selon différentes filières**

| Filière | % Elimination COT | % Elimination µ - polluants | Commentaires |
|---|---|---|---|
| 15 mg/l CAP₁ dans un décanteur à lit de boues | 30 | 50 | |
| 15 mg/l CAP₂ dans les membranes ( cf FR 2628337) | 30 | 70 | (1) |
| 15 mg/l CAP₂ dans les membranes + recirculation dans le décanteur (cf FR 2696440 | 45 | 75-80 | (2) |
| 10 mg/l CAP₁ dans le décanteur + 5 mg/l CAP₂ dans les membranes + recirculation dans le décanteur | 55-60 | 90-99 | (3) (4) |

| | | | |
|---|---|---|---|
| CAP₁= charbon actif en poudre non tamisé (granulométrie 50 -100 µm), Norit W35 CAP₂ charbon actif en poudre tamisé (granulométrie 10 µm), Norit S.A.U.F **(1)** : sachant que le temps de contact en lit de boues est de 12 à 48 heures et celui sur les membranes e l'ordre de 60 minutes, la forte surface spécifique de CAP permet néanmoins d'obtenir un résultat équivalent sur COT, supérieur sur micropolluants **(2) :** la recirculation permet d'optimiser l'exploitation de la capacité totale du CAP **(3) :** performances améliorées avec diminution des coûts, le CAP₁ étant nettement moins cher que le CAP₂ . La faible dose de CAP₂ permettrait même de fonctionner en filtration frontale, sans recirculation **(4)** : le CAP₂ est plus efficace sur les pesticides (micropolluants) lorsque le COT a préalablement été réduit sur CAP₁. | | | |

Par rapport aux autres procédés connus mettant en oeuvre la combinaison moyens de séparation gravitaire avec filtration plus moyens de séparation membranaire, l'invention apporte notamment les avantages suivants :
- L'ordre d'injection des réactifs (addition d'un premier réactif adsorbant pulvérulent sur une eau brute qui a été précédemment coagulée) optimise l'élimination globale des composés organiques (Carbone organique total - COT) à forte concentration (quelques mg/1).
- L'addition d'un deuxième adsorbant pulvérulent en amont des membranes constitue une double barrière d'adsorption des micropolluants (pesticides, composés responsables des goûts et odeurs) à faible concentration (quelques µg/l). Ce deuxième adsorbant est beaucoup plus efficace pour l'adsorption des micropolluants, ceci résultant de la réduction, en amont, de la concentration de matière organique naturelle (COT) par la coagulation et l'adsorption.
- Le recyclage du deuxième réactif adsorbant pulvérulent depuis les moyens de séparation membranaire vers l'amont des moyens de séparation gravitaire (avec un long temps de séjour) permet de saturer ce réactif pulvérulent et d'augmenter le rendement global d'adsorption dans les moyens de séparation gravitaire.
- Le rejet des moyens de séparation membranaire, contenant le deuxième réactif pulvérulent, est ramené vers les boues provenant du séparateur gravitaire qui contient le premier adsorbant. Ceci simplifie le problème du traitement des boues de la ligne de traitement et minimise les quantités d'eau « perdues » du fait des extractions.

## Revendications

1. Procédé pour l'épuration et la filtration de fluides, notamment d'effluents liquides tels que de l'eau brute contenant des polluants organiques en solution et mettant en oeuvre des moyens de séparation gravitaire tels que notamment décanteur et flottateur, ainsi que des moyens de séparation membranaire, en étape de finition, selon lequel un coagulant est injecté en un point de la conduite d'alimentation en eau brute, on introduit un réactif pulvérulent en amont de la séparation membranaire, ce réactif pulvérulent étant recyclé à partir des moyens de séparation membranaire vers l'amont des moyens de séparation gravitaire, ce procédé étant **caractérisé :**
**en ce que** un premier réactif pulvérulent est introduit en aval du point d'injection du coagulant et en amont du séparateur gravitaire,
**en ce que** ce premier réactif pulvérulent et le second réactif pulvérulent qui est introduit en amont de la séparation membranaire, présentent des caractéristiques différentes, notamment granulométrie, capacité d'adsorption adaptée aux polluants à éliminer,
et **en ce que** le temps de séjour du premier réactif pulvérulent dans son réacteur de contact est compris entre 5 et 60 heures.

2. Procédé selon la revendication 1, **caractérisé en ce que** le temps de séjour du premier réactif pulvérulent dans son réacteur de contact est compris entre 5 et 20 heures.

3. Procédé selon la revendication 1, **caractérisé en ce que** les réactifs pulvérulents sont constitués par des agents adsorbants, tels que notamment du charbon actif, des bentonites ou des échangeurs d'ions type gel ou macroporeux, à squelette standard ou magnétique.

4. Dispositif pour la mise en oeuvre du procédé selon l'une quelconque des revendications précédentes, qui comporte une ligne de traitement incluant notamment des moyens de séparation gravitaire (10), des moyens de séparation membranaire (13) en étape de finition, des moyens permettant respectivement l'introduction de coagulant, et d'un réactif pulvérulent en amont des moyens de séparation membranaire, ce dispositif comportant en outre une boucle de recyclage (16) du réactif pulvérulent depuis la purge des moyens de séparation membranaire (13) jusqu'à la conduite dans laquelle circule l'effluent liquide à traiter, en amont des moyens de séparation gravitaire (10),
**caractérisé en ce qu'**il comporte des moyens permettant l'introduction d'un premier réactif pulvérulent en amont de la séparation gravitaire,
le réactif pulvérulent injecté en amont des moyens de séparation membranaires étant un second réactif pulvérulent présentant des caractéristiques différentes,
et **en ce que** les moyens d'injection du coagulant nécessaire à la séparation sont situés en amont des moyens d'injection du premier réactif pulvérulent.

5. Dispositif selon la revendication 4 **caractérisé en ce que** les moyens de séparation gravitaire (10) sont réalisés sous la forme d'un clarificateur tel qu'un décanteur à lit de boues, éventuellement complété d'un système de séparateur lamellaire et précédé soit d'une zone de contact pour l'injection du coagulant, soit d'une étape complète de coagulation-floculation.

6. Dispositif selon la revendication 4, **caractérisé en ce que** les moyens de séparation gravitaire (10) sont réalisés sous la forme d'une clarificateur tel qu'un flottateur, éventuellement précédé soit d'une zone de contact pour l'injection du coagulant, soit d'une étape complète de coagulation-floculation.

7. Dispositif selon la revendication 4 **caractérisé en ce que** les moyens de séparation gravitaire (10) sont réalisés sous la forme d'un clarificateur, tel qu'un appareil à recirculation de boues, complété d'un système de séparation lamellaire et précédé soit d'une zone de contact pour l'injection du coagulant, soit d'une étape complète de coagulation, floculation.

8. Dispositif selon la revendication 4 **caractérisé en ce que** les moyens de séparation gravitaire (10') sont réalisés sous la forme d'un filtre granulaire (12') à flux ascendant ou descendant, éventuellement précédé soit d'une zone de contact pour l'injection du coagulant, soit d'une étape complète de coagulation-floculation..

9. Dispositif selon l'une quelconque des revendications 4 à 7, **caractérisé en ce que** les moyens de séparation membranaire (13) sont constitués par des systèmes de microfiltration, d'ultrafiltration, de nanofiltration, voire d'osmose inverse.

## Claims

1. Method for the purification and filtration of fluids, especially liquid effluents such as untreated water containing organic pollutants in solution and employing gravity separation means such as in particular a settling tank and a flotation separator, and as well as membrane separation means, in a finishing step, according to which a coagulant is injected at a point on the untreated water supply conduit, a powdery reagent is introduced upstream of the membrane separation, this powdery reagent being recycled from the membrane separation means to the upstream side of the gravity separation means, this method being **characterised:**
**in that** a first powdery reagent is introduced downstream of the coagulant injection point and upstream of the gravity separator,
**in that** this first powdery reagent and the second powdery reagent that is introduced upstream of the membrane separation have different characteristics, especially particle size and absorption capacity adapted to the pollutants to be eliminated, and in that the residence time of the first powdery reagent in its contact reactor is between 5 and 60 hours.

2. Method according to claim 1, **characterised in that** the residence time of the first powdery reagent in its contact reactor is between 5 and 20 hours.

3. Method according to claim 1, **characterised in that** the powdery reagents are formed by absorbents, such as especially activated carbon, bentonites or ion exchangers of the gel or macroporous type, with a standard or magnetic framework.

4. Device for implementing the method according to any one of the preceding claims, which comprises a treatment line including particularly gravity separation means (10), membrane separation means, as a finishing step, means for respectively introducing a coagulant and a powdery reagent upstream of the membrane separation means, this device also comprising a loop (16) for recycling the powdery reagent from the purge of the membrane separation means (13) as far as the conduit in which the liquid effluent to be treated is flowing, upstream of the gravity separation means (10),
**characterised in that** it comprises means for introducing a first powdery reagent upstream of the gravity separation,
the powdery reagent injected upstream of the membrane separation means being a second powdery reagent having different characteristics,
and **in that** the means of injecting the coagulant necessary for the separation are situated upstream of the means of injecting the first powdery reagent.

5. Device according to claim 4, **characterised in that** the gravity separation means (10) are produced in the form of a clarifier, such as a sludge bed settling tank, optionally supplemented by a lamellar separator system and preceded either by a contact zone for the injection of the coagulant, or by a complete coagulation/flocculation step.

6. Device according to claim 4, **characterised in that** the gravity separation means (10) are produced in the form of a clarifier such as a flotation separator, optionally preceded either by a contact zone for injecting the coagulant or by a complete coagulation/flocculation step.

7. Device according to claim 4, **characterised in that** the gravity separation means (10) are provided in the form of a clarifier, such as a sludge recirculator, supplemented by a lamellar separator system and preceded either by a contact zone for the injection of the coagulant or by a complete coagulation/flocculation step.

8. Device according to claim 4, **characterised in that** the gravity separation means (10') are produced in the form of a granular filter (12') with ascending or descending flow, optionally preceded either by a contact zone for injecting the coagulant or by a complete coagulation/flocculation step.

9. Device according to any one of claims 4 to 7,
**characterised in that** the membrane separation means (13) are formed by microfiltration, ultrafiltration, nanofiltration or even reverse osmosis systems.

## Patentansprüche

1. Verfahren zum Klären und Filtern von Fluiden, insbesondere Abwässern, wie Schmutzwasser mit einem Gehalt an gelösten organischen Verschmutzungen, wobei gravitative Trennmittel, insbesondere Dekantiermittel und Flotationsmittel, sowie Membran-Trennmittel für die Endbehandlung eingesetzt werden, gemäß welchem ein Koagulationsmittel an einer Stelle der Schmutzwasserzuleitung injiziert wird, wobei vor der Membrantrennung ein pulverförmiges Reaktionsmittel zugeführt wird, das nach den Membran-Trennmitteln vor die gravitativen Trennmittel zurückgeleitet wird, **dadurch gekennzeichnet, dass** ein erstes pulverförmiges Reaktionsmittel nach der Stelle der Injektion des Koagualationsmittels und vor dem gravitativen Trennmittel zugeführt wird, dass das erste pulverförmige Reaktionsmittel und das zweite pulverförmige Reaktionsmittel, das vor der Membran-Trennung zugeführt wird, unterschiedliche Eigenschaften, insbesondere unterschiedliche granulometrische Eigenschaften sowie an die zu eliminierenden Verschmutzungen angepasste Adsorptionsfähigkeiten, aufweisen, und dass die Verweildauer des ersten pulverförmigen Reaktionsmittels in seinem Kontaktreaktor 5 bis 60 Stunden beträgt.

2. Verfahren nach Anspruch 1, **dadurch gekennzeichnet, dass** die Verweildauer des ersten pulverförmigen Reaktionsmittels in seinem Kontaktreaktor zwischen 5 und 20 Stunden beträgt.

3. Verfahren nach Anspruch 1, **dadurch gekennzeichnet, dass** die pulverförmigen Reaktionsmittel aus Adsorptionsmitteln gebildet sind, insbesondere Aktivkohle, Bentonite oder gelförmige oder makroporöse Ionenaustauscher mit Standardstruktur oder magnetischen Eigenschaften.

4. Vorrichtung zur Durchführung des Verfahrens nach einem der vorangehenden Ansprüche, mit einer Behandlungslinie mit insbesondere gravitativen Trennmitteln (10), Membran-Trennmitteln (13) für die Endbehandlung, Mitteln zum jeweiligen Zuführen eines Koagulationsmittels und eines pulverförmigen Reaktionsmittels vor der Membran-Trennung, wobei die Vorrichtung weiterhin eine Recycling-Schleife (16) für das pulverförmige Reaktionsmittel vom Auslass der Membran-Trennmittel (13) bis zu derjenigen Leitung oberhalb der gravitativen Trennmittel (10) aufweist, in der das zu behandelnde Fluid zirkuliert, **dadurch gekennzeichnet, dass** sie Mittel umfasst, welche die Zufuhr eines ersten pulverförmigen Reaktionsmittels vor der gravitativen Trennung erlauben, wobei das vor den Membran-Trennmitteln zugeführte pulverförmige Reaktionsmittel ein zweites pulverförmiges Reaktionsmittel mit anderen Eigenschaften ist, und dass sich die Mittel zur Injektion des für die Abtrennung erforderlichen Koagulationsmittels vor den Mitteln für die Zufuhr des ersten pulverförmigen Reaktionsmittels befinden.

5. Vorrichtung nach Anspruch 4, **dadurch gekennzeichnet, dass** die gravitativen Trennmittel (10) in Form einer Kläreinrichtung, wie eines Schlammbett-Dekanters, ausgebildet und gegebenenfalls durch ein Lamellen-Trennsystem ergänzt sind, wobei der Kläreinrichtung entweder ein Kontaktbereich für das Injizieren des Koagulationsmittels oder ein vollständiger Koagulations-Flocculations-Abschnitt vorgeschaltet ist.

6. Vorrichtung nach Anspruch 4, **dadurch gekennzeichnet, dass** die gravitativen Trennmittel (10) in Form einer Kläreinrichtung, wie einer Flotationseinrichtung, ausgebildet sind, wobei der Kläreinrichtung gegebenenfalls entweder ein Kontaktbereich zum Injizieren des Koagulationsmittels oder ein vollständiger Koagulations-Flocculations-Abschnitt vorgeschaltet ist.

7. Vorrichtung nach Anspruch 4, **dadurch gekennzeichnet, dass** die gravitativen Trennmittel (10) in Form einer Kläreinrichtung, wie einer Einrichtung zur Schlamm-Rezirkulation, ausgebildet und durch ein Lamellen-Trennsystem ergänzt sind, wobei der Kläreinrichtung entweder ein Kontaktbereich zum Injizieren des Koagulationsmittels oder ein vollständiger Koagulations-Flocculations-Abschnitt vorgeschaltet ist.

8. Vorrichtung nach Anspruch 4, **dadurch gekennzeichnet, dass** die gravitativen Trennmittel (10') in Form eines Granulatfilters (12') mit aufwärts oder abwärts gerichtetem Fluss ausgebildet ist, dem gegebenenfalls entweder ein Kontaktbereich zum Injizieren des Koagulationsmittels oder ein vollständiger Koagulations-Flocculations-Abschnitt vorgeschaltet ist.

9. Vorrichtung nach einem der Ansprüche 4 bis 7, **dadurch gekennzeichnet, dass** die Membran-Trennmittel (13) durch Mikrofiltrationssysteme, Ultrafiltrationssysteme, Nanofiltrationssysteme oder Umkehrosmose-Systeme gebildet sind.
